# EUROPEAN PATENT APPLICATION

(11) **EP 1 584 359 A2**
(43) Date of publication of application: **12.10.2005**
(21) Application number: 05102445.3
(22) Date of filing: 29.03.2005
(51) Int. Cl.: A63F 13/06

(54) **Game controller power management**

(30) Priority: 31.03.2004 US 817317
(71) Applicant: MICROSOFT CORPORATION, Redmond, Washington 98052-6399 (US)
(72) Inventor: Lum, Richard, Redmond, WA 98052 (US); Guo, Wei, Redmond, WA 98052 (US)
(74) Representative: Zimmer, Franz-Josef

(57) **Abstract**

A game controller and host manage reception and transmission power of the game controller by determining quality of service (QOS) of data received at the game controller and the host and decrementing power and receiver sensitivity levels to the lowest levels where QOS is acceptable. By maintaining lowest transmission power and receiver sensitivity levels, battery consumption is reduced.

## Description

### TECHNICAL FIELD

This invention relates to peripherals for controlling video games, and more particularly, to game controllers that wirelessly connect to host game consoles.

### BACKGROUND

Game controllers facilitate user interaction with video games. Game controllers come in many configurations depending upon the desired gaming environment for which the game controllers are to be used. There are multi-purpose game controllers with one or more multi-function actuators for controlling a wide range of games and specialty game controllers designed for specific genre of games, such as steering wheels for racing games, weapons for shooting games, and navigation sticks for aviation games.

Certain game controllers are designed to connect with game hosting systems and specifically to game consoles or personal computers (PCs) using wireless technologies. During game play, such wireless game controllers are designed to operate with a host such as a game console or PC, where the game controller and host transmit and receive data to one another. Typically such game controllers are battery operated, and after awhile the battery or batteries are required to be charged or replaced.

### SUMMARY

A game controller and a host manage reception and transmission power of the game controller. The game controller and host determine quality of service (QOS) of data being sent from and to the game controller, and the reception and transmission power of the game controller is adjusted to operate at the lowest power level with acceptable QOS based on the QOS determination.

### BRIEF DESCRIPTION OF THE CONTENTS

The detailed description is described with reference to the accompanying figures. In the figures, the left-most digit(s) of a reference number identifies the figure in which the reference number first appears. The use of the same reference numbers in different figures indicates similar or identical items.
Fig. 1 illustrates a gaming system with a host game console and a game controller that manage reception and transmission power of the game controller.
Fig. 2 is a block diagram of the host game console.
Fig. 3 is a block diagram of the game controller.
Fig. 4 is a flow diagram showing a process for adjusting reception power at the game controller performed by the game controller.
Fig. 5 is a flow diagram showing a process for adjusting transmission power of the game controller performed by the host game console.

### DETAILED DESCRIPTION

The following disclosure describes power management of transmission and reception of data from a game controller. The game controller determines quality of service (QOS) of data received from a host game console or host, and decrements reception power until QOS degrades below an acceptable level or increments reception power until QOS is acceptable. The host determines QOS of data received from the game controller and provides feedback to the game controller to decrease transmission power until QOS degrades below an acceptable level or increases transmission power until QOS is acceptable. The determining of QOS at the host and game controller and increasing/decreasing of reception and transmission power at the game controller are continuous in order to reduce power at the game controller while maintaining continuous game play (i.e., uninterrupted communication).

### Gaming System

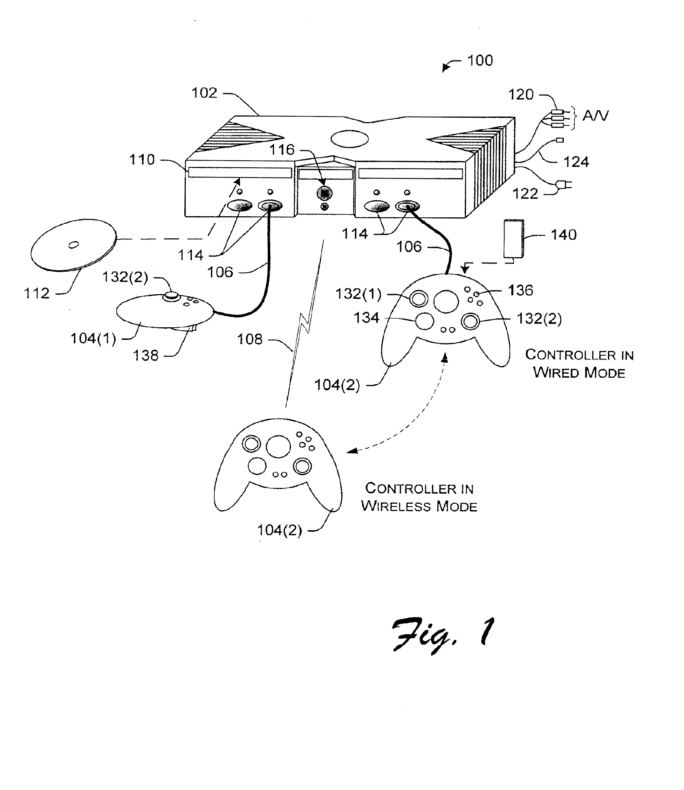

Fig. 1 shows an exemplary console-based gaming system 100. It includes a host game console or host 102 and up to four controllers, as represented by two game controllers 104(1) and 104(2). In other embodiments host 102 may be a personal computer (PC). Each game controller 104 is coupled to the host 102 via a wired or wireless interface and utilizes a suitable data protocol, such as USB (Universal Serial Bus). One game controller 104(2) is illustrated as operating in two different modes: a wired mode and a wireless mode. In the wired mode, the game controller 104(2) is connected to the host 102 via a cable 106. The game controller 104(2) derives power from the host game console 102 through the cable 106. In the wireless mode, the game controller 104(2) is connected to the host 102 via a wireless link 108. The cable 106 may be detached from the game controller 104(2) to provide greater freedom of movement.

The wireless link 108 may be implemented using one of various wireless technologies such as IR (infrared), and RF (radio frequency) which includes Bluetooth and WiFi (i.e., IEEE 802.11b). In particular when RF technology is used, reception power at game controller 104(2) may be reduced or increased. Furthermore when RF technology is used, transmission power at game controller 104(2) may be reduced or increased.

Reception and transmission power at game controller 104(2) is particularly adjusted to reduce battery consumption at game controller 104(2). Incremental increases or decreases in reception and transmission power at game controller 104(2) are particularly provided. In other words game controller 104(2) may have multiple transmission and reception power levels to choose from. This is further discussed below. Regardless of the reception and transmission power of game controller 104(2), wireless link 108 is continuously maintained during game play.

When more than one game controller 104 operates in wireless mode, time division multiple access (TDMA) is employed to allocate a time slot as defined by TDMA, for each game controller 104 to communicate with host game console 102. Therefore only one game controller 104 communicates with host game console 102 at any given time, avoiding interference between the game controllers 104. Furthermore, all of the game controllers 104 may individually adjust reception and transmission power.

A player (i.e., user) can switch between wireless operation and wired operation by connecting the cable 106 to, or disconnecting it from, the host 102. Cable 106 provides serial communication between host 102 and controller 104(2). While in wired mode, the game controller 104(2) is powered by the cable 102 which also provides a charging connection allowing the game controller 104(2) battery (or batteries) to be recharged. In certain embodiments non-rechargeable batteries may be used.

The host 102 is equipped with a portable media drive 110 and an optional internal hard disk drive. The portable media drive 110 supports various forms of portable storage media as represented by an optical storage disc 112. Examples of suitable portable storage media include DVD, CD-ROM, game discs, game cartridges, and so forth.

The host 102 has four physical slots 114 on its front face to support and connect up to four game controllers, although the number and arrangement of slots may be modified. In the wired mode, the game controllers 104 are assigned to the physical slots 114 for controlling various characters/features of the video game. In wireless mode the game controllers 104(1)-104(2) are assigned to virtual slots.

In one implementation, virtual slots are assigned, without prompting the user, in sequential order to reduce complexity for the user. Thus, the first virtual slot is assigned to the first wireless game controller 104 introduced to the host 102; the second virtual slot is assigned to the second wireless game controller 104, and so on. Alternatively, the user can choose a virtual slot via a user interface presented on the display. Actuation of a pre-designated button which may be included in control buttons 116 on the host 102 invokes a slot assignment pane from which the player can select an available virtual slot.

The control buttons 116 are positioned on the front face of the game console 102. Control buttons 116 include, for example, a power button that switches power to the game console and an eject button that alternately opens and closes a tray of the portable media drive 110 to allow insertion and extraction of the storage disc 112.

The host 102 connects to a television or other display (not shown) via A/V interfacing cables 120. A power cable 122 provides power to the host 102. The host 102 may be further equipped with internal or externally added network capabilities, as represented by the cable or modem connector 124 to facilitate access to a network, such as a local area network (LAN) or the Internet.

Each game controller 104 may be equipped with any of a wide variety of user interaction mechanisms. As illustrated in Fig. 1, each game controller 104 is equipped with two thumbsticks 132(1) and 132(2), a directional or D-pad 134, surface buttons 136, and two triggers 138. These mechanisms are merely representative, and other known gaming mechanisms may be substituted for or added to those shown in Fig. 1.

A memory unit 140 may be inserted into the game controller 104 to provide additional and portable storage (as illustrated) or alternatively inserted into the host 102. Portable memory units such as memory unit 140 enable players to store game parameters and transport them for play on other hosts (i.e., game consoles). In the illustrated implementation, each game controller 104 is configured to accommodate two memory units 140, although more or less than two memory units may be employed in other implementations. In other implementations, the host 102 may support one or more memory units per player.

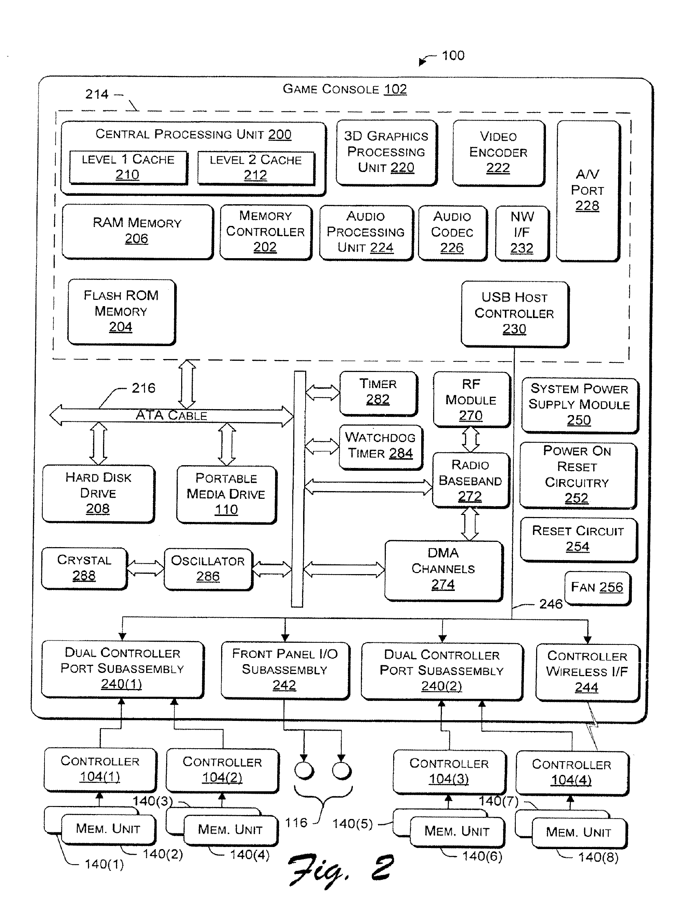

Fig. 2 shows functional components of the host 102 in more detail. The host 102 has a central processing unit (CPU) 200 and a memory controller 202 that facilitates processor access to various types of memory, including a flash ROM (Read Only Memory) 204, a RAM (Random Access Memory) 206, a hard disk drive 208, and the portable media drive 110. The CPU 200 is equipped with a level 1 cache 210 and a level 2 cache 212 to temporarily store data and hence reduce the number of memory access cycles, thereby improving processing speed and throughput.

CPU 200 processes received data from a game controller (i.e., game controller 104), and determines QOS based on the received data. CPU 200 provides feedback to the game controller (e.g., game controller 104) to either increment or decrement transmission power based on the QOS of the received data. One method of determining whether received data satisfies a QOS metric is through the use of checksums on the received data. In other words data may be sent as a group of bits with a particular bit or bits reserved for use as a checksum. A checksum calculation is performed on the received bits, including the checksum's bits, to determine if the data has been correctly received. If the data has been correctly received, the QOS metric is satisfied. If the data has not been correctly received, the QOS metric is not satisfied.

QOS metrics may include actual (i.e., text) data of a received data packet; header data of a received data; and received voice data. Another QOS metric may include forward error correcting (FEC) code which inherently includes error checking. For example, if any of the QOS metrics indicates that data is not correctly received, CPU 200 provides feedback to the game controller to increment transmission power. If all QOS metrics are correctly received (i.e., satisfied), transmission power at the game controller may be more than adequate, and the game controller may decrement transmission power. This is further discussed below.

The CPU 200, memory controller 202, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnect (PCI) bus.

As one suitable implementation, the CPU 200, memory controller 202, ROM 204, and RAM 206 are integrated onto a common module 214. ROM 204 is configured as a flash ROM that is connected to the memory controller 202 via a PCI (Peripheral Component Interconnect) bus and a ROM bus (neither of which are shown). RAM 206 is configured as multiple DDR SDRAM (Double Data Rate Synchronous Dynamic RAM) modules that are independently controlled by the memory controller 202 via separate buses (not shown). The hard disk drive 208 and portable media drive 110 are connected to the memory controller 202 via the PCI bus and an ATA (Advance Technology Attachment) bus 216.

A 3D graphics processing unit 220 and a video encoder 222 form a video processing pipeline for high speed and high resolution graphics processing. Data is carried from the graphics processing unit 220 to the video encoder 222 via a digital video bus (not shown). An audio processing unit 224 and an audio codec (coder/decoder) 226 form a corresponding audio processing pipeline with high fidelity and stereo processing. Audio data is carried between the audio processing unit 224 and the audio codec 226 via a communication link (not shown). The video and audio processing pipelines output data to an A/V (audio/video) port 228 for transmission to the television or other display. In the illustrated implementation, the video and audio processing components 220-228 are mounted on the module 214.

Also implemented on the module 214 are a USB host controller 230 and a network interface 232. The USB host controller 230 is coupled to the CPU 200 and the memory controller 202 via a bus (e.g., PCI bus) and serves as host for the peripheral controllers 104(1)-104(4). A network interface 232 provides access to a network (e.g., LAN, Internet, etc.) and may be any of a wide variety of various wired or wireless interface components including an Ethernet card, a modem, a Bluetooth module, a cable modem, and the like.

The host 102 has two dual controller support subassemblies 240(1) and 240(2), with each subassembly supporting up to two of the game controllers 104(1)-104(4). A front panel I/O subassembly 242 supports the functionality of the control buttons 116 which includes binding button 117, as well as any LEDs (light emitting diodes) or other indicators exposed on the outer surface of the host 102.

A controller wireless interface 244 provides support for wireless communication with the game controllers 104. Controller wireless interface 244 may include IR and RF interfaces and is used to maintain the wireless link 108 described in Fig. 1. Controller wireless interface 244 allows data and data packets to be received from game controllers 104 where QOS metrics are determined as to the received data and data packets. Furthermore, through controller wireless interface 244 data and data packets are sent to the game controllers 104 which also determine QOS metrics as to the received data and data packets from host 102.

The subassemblies 240(1), 240(2), and 242 and controller wireless interface 244 are coupled to the module 214, and particularly the USB controller 230, via one or more cable assemblies 246.

Eight memory units 140(1)-140(8) are illustrated as being connectable to the four game controllers 104(1)-104(4) (i.e., two memory units for each game controller). Each memory unit 140 offers additional storage on which games, game parameters, and other data may be stored. When inserted into a game controller (e.g., game controller 104), the memory unit 140 can be accessed by the memory controller 202. It is noted that, in other implementations, the memory units 140 may be inserted into compatible slots in the host 102.

A system power supply module 250 provides power to the components of the gaming system 100 and to the game controllers 104 when operating in the wired mode. A power on reset circuitry 252 and reset circuit 254 allow the host 102 to be reset during operation or when power is initially provided (i.e., the game console is turned on). A fan 256 cools the circuitry within the host 102.

The host 102 may further implement a cryptography engine to perform common cryptographic functions, such as encryption, decryption, authentication, digital signing, hashing, and the like. The cryptography engine may be implemented as part of the CPU 200, or in software stored in memory (e.g., ROM 204, hard disk drive 208) that executes on the CPU 200, so that the CPU 200 is configured to perform the cryptographic functions. Furthermore, an error correcting (e.g., FEC) engine may be implemented as part of the CPU 200, or in software that executes on the CPU 200, so that CPU 200 performs error correcting on received data. The derived error correcting information may be one of the QOS metrics that the host 102 (i.e., CPU 200) determines as to the received data.

An RF module 270 (e.g., 2.4 GHz ISM module), a radio baseband unit 272, and DMA (Direct Memory Access) channels unit 274 support wireless connectivity to game controllers 104, sending feedback to game controllers 104 to either decrement or increment transmission power depending on the QOS of received data as determined by CPU 200. In this implementation, host 102 also has timing components to provide timing functionality, including a general purpose timer 282 (e.g., 16-bit timer), a watchdog timer 284, an oscillator 286, and a crystal 288.

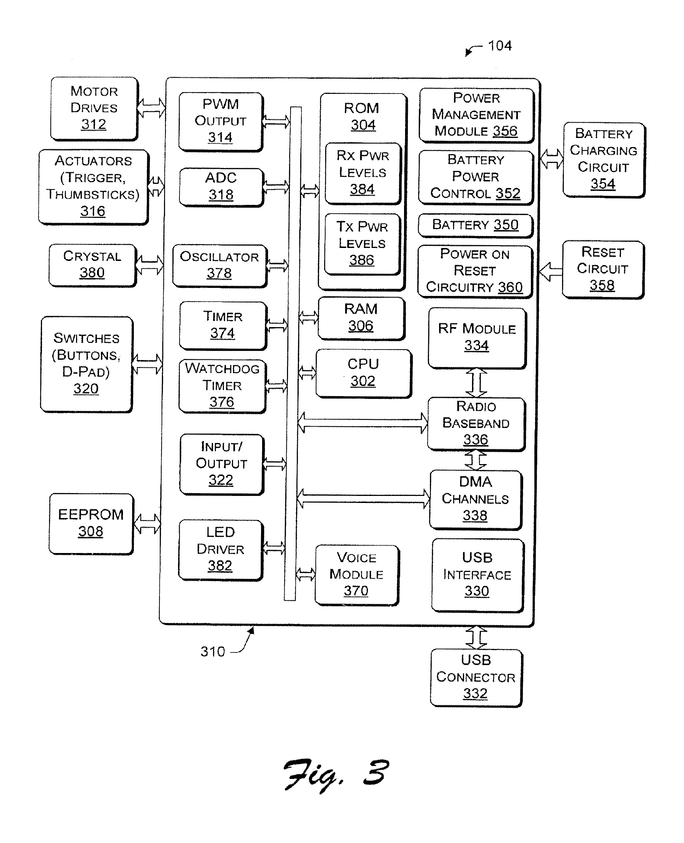

Fig. 3 shows functional components of the game controller 104 in more detail. The game controller 104 has a central processing unit (CPU) 302 and memory, including ROM 304, RAM 306 and EEPROM 308. In the illustrated implementation, the CPU 302, ROM 304, and RAM 306 are integrated onto a common module 310 and are interconnected via one or more bussing structures. EEPROM 308 is separate from, but interfaced with, the module 310.

The game controller 104 further includes motor drives 312 to provide tactile feedback to the player (i.e., user) and a PWM (pulse width modulation) output 314 to provide the control signals for the motor drives 312. Player actions received via variable-input actuators 316 (e.g., thumbsticks 132 and triggers 138) are converted by analog-to-digital converter (ADC) 318 to provide player input to the CPU 302. ADC 318 can be implemented, for example, as an eight channel 10-bit or 12-bit converter. Other player actions received through dual-state switches 320 (e.g., buttons 136 and D-pad 134) are passed through I/O 322 to CPU 302.

As noted above, the game controller 104 supports both wired operation and wireless operation. The game controller 104 includes a USB interface 330 and USB connector 332 for the wired mode of operation. In the illustrated implementation, the game controller 104 is configured to support wireless operation using RF technology. Other implementations may use other wireless technology such as IR. An RF module 334 (e.g., 2.4 GHz ISM module), a radio baseband unit 336, and DMA channels unit 338, support the wireless mode of operation. Reception power and transmission power to RF module 334, radio baseband unit 336, and DMA channels unit 338 may be adjusted up or down to lower threshold and upper threshold power levels. In particular, reception and transmission power are adjusted per a QOS measurement as to data received at the game controller 104 and data received at a host such as host 102.

The game controller 104 is equipped with its own power source to enable wireless operation. In the illustrated implementation, a battery 350 supplies power to the electronic modules and components of the game controller 104. A battery power controller 352 monitors the battery 350 and detects when power is low. Upon detection, a low power condition can be conveyed to the player (e.g., illumination of a light indicator on the game controller or display of a warning while the game is being played). The player can then switch to wired mode by plugging in the cable to the game console. The battery power controller 352 also monitors charging behavior of the battery 350, such as how long it takes to charge and detection of when it is fully charged. In wired mode, the game controller 104 receives power from the game console.

A battery charging circuit 354 recharges battery 350 while the game controller is connected via the cable. A power management module 356 generates voltages for the different components on the module 310 and dynamically manages power consumption of those components. A reset circuit 358 and power on reset circuitry 360 allow the game controller to be reset during operation or when power is initially provided. In certain embodiments, power management module 356 is instructed by CPU 200 to adjust reception and transmission power of RF module 334, radio baseband unit 336, and DMA channels unit 338. In other embodiments, CPU 200 directly instructs RF module 334, radio baseband unit 336, and DMA channels unit 338 to adjust reception and transmission power.

A voice module 370 may be optionally included in the game controller 104 to receive oral commands or speech from the player (i.e., user). The game controller 104 also has timing components to provide timing functionality, including a general purpose timer 374 (e.g., 16-bit timer), a watchdog timer 376, an oscillator 378, and a crystal 380. The controller 104 further includes an LED driver 382 for one or more LEDs on the controller (e.g., surface buttons 136).

In this example, a table of reception power levels 384 and a table of transmission power levels 386 are stored in ROM 304. Table 384 includes the various power levels of operation for reception of data from host (e.g., host 102) including upper threshold, lower threshold, and intermediate power levels. Power levels for table 384 may be expressed in particular units including watts, decibels, volts, etc. Likewise table 386 includes various power levels of operation for transmission of data to a host (e.g., host 102) including upper threshold, lower threshold, and intermediate power levels. Power levels for table 386 may also be expressed in particular units including watts, decibels, volts, etc.

The game controller 104 may further implement an error correcting (e.g., FEC) engine that may be implemented as part of the CPU 302, or in software that executes on the CPU 302, so that CPU 302 performs error correcting on received data. The derived error correcting information may be one of the QOS metrics that the game controller 104 (i.e., CPU 302) determines as to the received data.

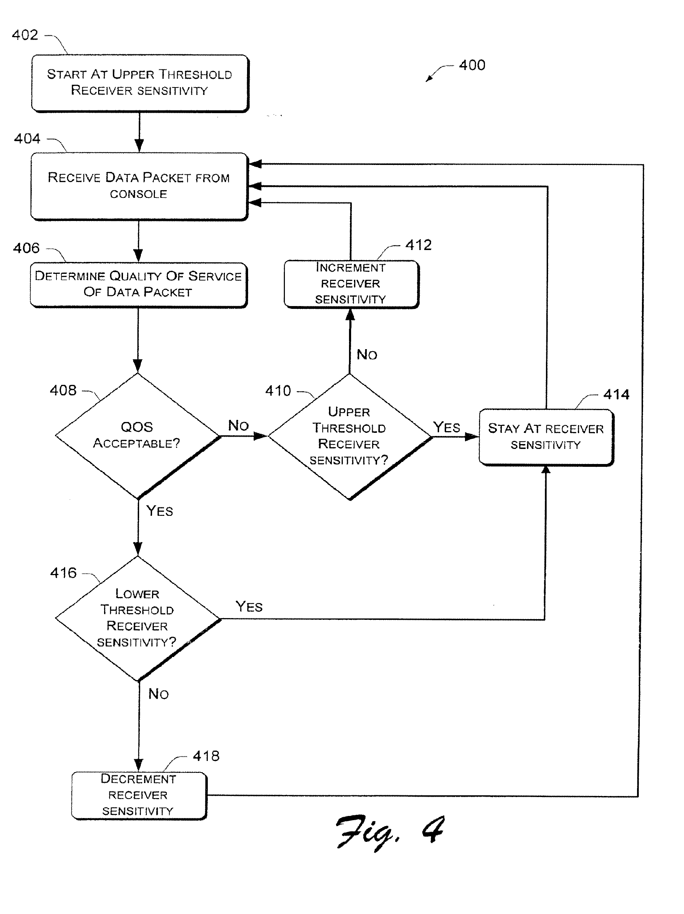

Fig. 4 shows a process 400 for adjusting (i.e., changing) game controller reception power. The process 400 is performed at a game controller such as game controller 104 as it receives data from a host such as host 102. Process 400 can be continuously performed until transmission (i.e., communication) between the game controller and host is complete.

The process 400 is illustrated as a collection of blocks in a logical flow graph, which represent a sequence of operations that can be implemented in hardware, software, or a combination thereof. In the context of software, the blocks represent computer instructions that, when executed by one or more processors, perform the recited operations.

At block 402, the game controller begins receiving initial data from the host. To provide greater assurance that initial data is received from the host, the game controller sets its receiver sensitivity at an upper threshold value to receive the initial data or data packet from the host.

At block 404, data or a data packet is received by the game controller from the host. The data may include a distinct unit such as a data packet which may include a header data, actual data (i.e., text data), and voice data, which may be encrypted and/or employ error correcting schemes such as checksums. A wait may be performed to assure that all of the data or the complete data packet is received at the particular receiver sensitivity. In other implementations, a set (i.e., predetermined) wait period may be performed (e.g., wait for 100 ms) before proceeding to the next block (i.e., block 406); however, a complete data packet or sufficient data should be made available to perform a quality of service (QOS) determination by the game controller.

At block 406, QOS analysis is performed or determined as to the data received at a particular receiver sensitivity. The QOS analysis may include a determination as to whether data is correctly received through error correcting or checksums. Particular data may relate to a particular QOS metric. If the particular data is correctly received, a QOS metric is satisfied. However, if the particular data is not correctly received, the QOS metric is not satisfied. QOS metrics (i.e., particular data) include, but are not limited to, header data, actual (e.g., text) data, and voice data. Furthermore, forward error code (FEC) with inherent error correcting may be included as a QOS metric.

In determining if QOS is acceptable (i.e., block 408), a threshold level may be set which relates to a number of QOS metrics being met. For example, if three of four QOS metrics are satisfied (i.e., found to be good), the QOS is acceptable. In certain cases, a QOS metric such as voice data may be irrelevant since the game controller and host are not communicating voice data. Irrelevant or non-applicable QOS metrics are ignored and not factored in determining if QOS is acceptable.

If QOS is determined to be not acceptable (i.e., following the "No" branch of block 408), a determination is made if the game controller is operating at the upper threshold receiver sensitivity (i.e., block 410).

If the game controller is not operating at its upper threshold receiver sensitivity (i.e., following the "No" branch of block 410), block 412 is performed which increments the reception power level of the game controller to a power level one increment higher than the current power level in order to adequately receive data (i.e., meet an acceptable QOS). Subsequent data is then received by the game controller at this reception power level (i.e., block 404 is performed).

If the game controller is operating at its upper threshold receiver sensitivity (i.e., following the "Yes" branch of block 410), block 414 is performed which provides that the receiver sensitivity stays at the current level since the game controller is already operating at the upper receiver sensitivity level. Subsequent data is then received by the game controller at the upper threshold receiver sensitivity level (i.e., block 404 is performed).

If QOS is determined to be acceptable (i.e., following the "Yes" branch of block 408), a determination is made if the game controller is operating at the lower threshold receiver sensitivity level (i.e., block 416).

If the game controller is not operating at its lower threshold receiver sensitivity level (i.e., following the "No" branch of block 416), block 418 is performed which decrements the reception sensitivity level of the game controller to a level that is one increment lower than the current sensitivity level, thus conserving game controller battery power. Subsequent data is then received by the game controller at this reception sensitivity level (i.e., block 404 is performed).

If the game controller is operating at its lower receiver sensitivity level (i.e., following the "Yes" branch of block 416), block 414 is performed which provides that receiver sensitivity reception power level stays at the current receiver sensitivity since the game controller is already operating at the lower receiver sensitivity level. Subsequent data is then received by the game controller at the lower threshold receiver sensitivity level (i.e., block 404 is performed).

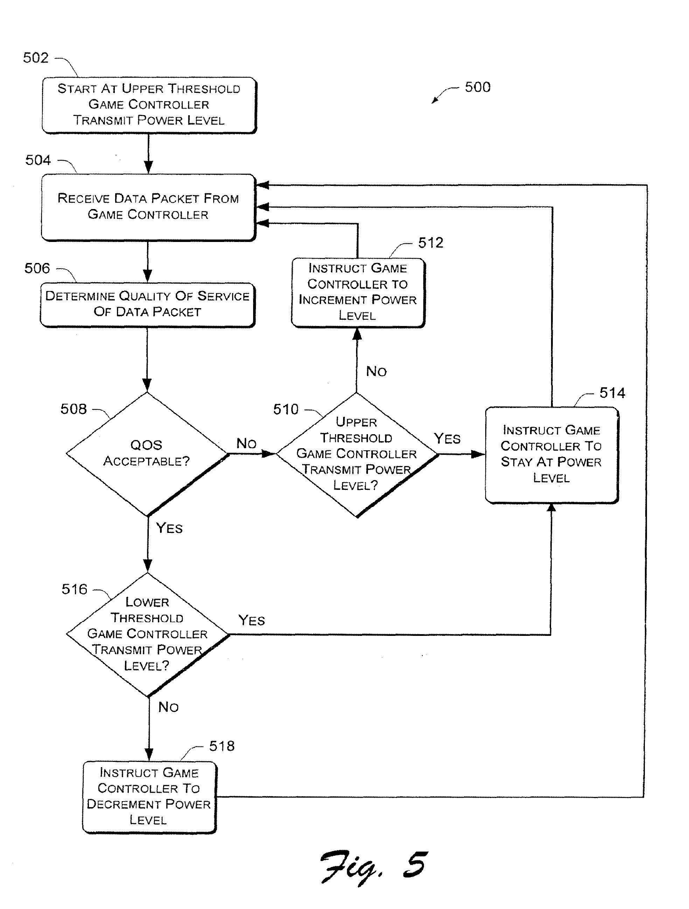

Fig. 5 shows a process 500 for adjusting (i.e. changing) game controller transmission power. The process 500 is performed at a host such as host 102 as it receives data from a game controller such as game controller 104. Process 500 can continuously performed until transmission (i.e., communication) between the game controller and host is complete.

The process 500 is illustrated as a collection of blocks in a logical flow graph, which represent a sequence of operations that can be implemented in hardware, software, or a combination thereof. In the context of software, the blocks represent computer instructions that, when executed by one or more processors, perform the recited operations.

At block 502, the host begins receiving initial data from the game controller. To provide greater assurance that initial data is received by the host, the game controller sets its transmission power level at an upper threshold value to transmit the initial data or data packet to the host.

At block 504, data or a data packet is received by the host from the game controller. The data may include a distinct unit such as a data packet which may include a header data, actual data (i.e., text data), and voice data, which may be encrypted and/or employ error correcting schemes. A wait may be performed to assure all of the data or the complete data packet is received at the particular reception power level. In other implementations, a set (i.e., predetermined) wait period may be performed (e.g., wait for 100 ms) before proceeding to the next block (i.e. block 506); however a complete data packet or sufficient data should be made available to perform a quality of service (QOS) analysis by the host.

At block 506, QOS analysis is performed or determined as to the data received at a particular transmission power level. The QOS analysis may include a determination as to whether data is correctly received through error correcting or checksums. Particular data may relate to a particular QOS metric. If the particular data is correctly received, a QOS metric is satisfied. However, if the particular data is not correctly received, the QOS metric is not satisfied. QOS metrics (i.e., particular data) include, but are not limited to, header data, actual (e.g., text) data, and voice data. Furthermore, forward error code (FEC) with inherent error correcting may be included as a QOS metric.

In determining if QOS is acceptable (i.e., block 508), a threshold level may be set which relates to a number of QOS metrics being met. For example, if three of four QOS metrics are satisfied (i.e., found to be good), the QOS is acceptable. In certain cases, a QOS metric such as voice data may be irrelevant since the game controller and host are not communicating voice data. Irrelevant or non-applicable QOS metrics are ignored and not factored in determining if QOS is acceptable.

If QOS is determined to be not acceptable (i.e., following the "No" branch of block 508), a determination is made if the game controller is operating at the upper threshold transmission power level (i.e., block 510). At block 510, the game controller informs the host whether it is operating at the upper threshold transmission power level.

If the host determines that the game controller is not operating at its upper threshold transmission power level (i.e., following the "No" branch of block 510), the host instructs the game controller to increment its transmission power level to a power level one increment higher than the current power level in order for the host to adequately receive data (i.e., meet an acceptable QOS). Subsequent data is then received by the host at this transmission power level (i.e., block 504 is performed).

If the game controller is operating at its upper threshold transmission power level (i.e., following the "Yes" branch of block 510), block 514 is performed which provides that the transmission power level stays at the current power level since the game controller is already operating at the upper threshold transmission power level. Subsequent data is then received by the host at the upper threshold transmission power level (i.e., block 504 is performed).

If QOS is determined to be acceptable (i.e., following the "Yes" branch of block 508), a determination is made if the game controller is operating at the lower threshold transmission power level (i.e., block 516). At block 516, the game controller informs the host whether it is operating at the lower threshold transmission power level.

If the host determines that the game controller is not operating at its lower threshold transmission power level (i.e., following the "No" branch of block 516), block 518 is performed where the host instructs the game controller to decrement its reception power level to a power level one increment lower than the current power level, thus reducing the transmission power level and conserving game controller battery power. Subsequent data is then received by the host at this transmission power level (i.e., block 504 is performed).

If the game controller is operating at its lower threshold power level (i.e., following the "Yes" branch of block 516), block 514 is performed which provides that transmission power level stays at the current power level since the game controller is already operating at the lower threshold transmission power level. Subsequent data is then received by the host at the lower threshold transmission power level (i.e., block 504 is performed).

### Conclusion

The above-described game system manages reception and transmission power at a game controller to minimize battery consumption of the game controller. Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A gaming system comprising:
a host that receives game controller data and determines quality of service, QOS, on the received game controller data, wherein transmission power management at the game controller is based on the QOS of the received game controller data; and
a game controller that transmits the game controller data to the host, receives host data from the host and determines QOS on the received host data, wherein reception power management at the game controller is based on the QOS of the received host data.

2. The gaming system as recited in claim 1, wherein the host instructs the game controller to decrement transmission power at the game controller if the host determines that QOS on the received game controller data is acceptable.

3. The gaming system as recited in claim 1, wherein the host instructs the game controller to increment transmission power at the game controller if the host determines that QOS on the received game controller data is not acceptable.

4. The gaming system as recited in claim 1, wherein the game controller decrements receiver sensitivity at the game controller if the game controller determines that QOS on the received host data is acceptable.

5. The gaming system as recited in claim 1, wherein the game controller increments receiver sensitivity at the game controller if the game controller determines that QOS on the received host data is not acceptable.

6. The gaming system as recited in claim 1, wherein the host and game controller comprise wireless interfaces to establish a wireless link to transmit and receive the host data and game controller data.

7. The gaming system as recited in claim 6, wherein the wireless interfaces are comprised of radio frequency, RF, wireless technology.

8. The gaming system as recited in claim 1, wherein the QOS is based on error correcting using checksums on received data that includes one or more of the following: text data, data packet header data, and voice data.

9. The gaming system as recited in claim 1, wherein the host comprises:
a processor; and
an interface to receive game controller data, coupled to the processor, wherein the processor determines if the game controller data has been correctly received.

10. The gaming system as recited in claim 1, wherein the game controller comprises:
a processor;
an interface to receive host data, coupled to the processor, wherein the processor determines if the host data has been correctly received.

11. The gaming system as recited in claim 1, wherein the host comprises one of a game console or a personal computer.

12. A game controller that adjusts reception power based on quality of service, QOS, of received data from a host, and adjusts transmission power based on feedback from the host.

13. The game controller as recited in claim 12, wherein the feedback from the host is based on QOS of data transmitted by the game controller and received by the host.

14. A game controller as recited in claim 12, embodied as a general-purpose controller with one or more multi-function actuators.

15. A host in a gaming system that determines QOS of data received from a game controller and provides feedback to the game controller to adjust transmission power at the game controller based on the QOS determination.

16. A method to adjust communication power of a game controller comprising:
receiving data from a host;
determining if data from the host is correctly received ; and
changing receiver sensitivity based on the determining if data from the host is correctly received.

17. The method as recited in claim 16, wherein the receiving is through a wireless link.

18. The method as recited in claim 16, wherein the determining is based on at least one of the following data: text data, header data, error correcting data, and voice data.

19. The method as recited in claim 16, wherein the changing decrements receiver sensitivity if the received data is determined to be not correct.

20. The method of claim 16 further comprising changing transmission power based on feedback from the host.

21. The method of claim 20 wherein the feedback is based on a determination by the host of whether data received from the game controller is correct.

22. One or more computer-readable media comprising computer-executable instructions that, when executed, perform the method as recited in claim 16.

23. A game controller that performs the method as recited in claim 16.

24. A method to adjust communication power of a game controller comprising:
receiving data from the game controller;
determining quality of service, QOS, of the received data from the game controller; and
providing feedback regarding how to adjust transmission power to the game controller based on the QOS determination.

25. The method as recited in claim 24, wherein the receiving is performed through a wireless link between the host and game controller.

26. The method as recited in claim 24, wherein the determining is based on one or more of the following QOS metrics: text data, header data, error correcting data, and voice data.

27. The method as recited in claim 24, wherein the providing feedback instructs the game controller to decrement transmission power if QOS is determined to be acceptable and instructs the game controller to increment reception power if QOS is determined to be not acceptable.

28. One or more computer-readable media comprising computer-executable instructions that, when executed, perform the method as recited in claim 24.

29. A host that performs the method as recited in claim 24.

30. A storage medium for use with a gaming system, the storage medium having instructions that, when executed on the gaming system, causes the gaming system to perform acts comprising:
determining QOS of data communicated between a host and one or more game controllers;
adjusting receiver sensitivity in the game controllers based on QOS determination of host data received at each of the game controllers; and
adjusting transmission power in each of the game controllers based on QOS determination of game controller data received by the host from each of the game controllers.

31. A storage medium as recited in claim 30, wherein the determining QOS is based on one or more of the following metrics: data received, error correcting on data received, header data, and voice data.

32. A storage medium as recited in claim 30, wherein the determining QOS of data is performed on data that is communicated through wireless communication links between the host and game controllers.

33. A gaming system comprising:
means for exchanging data between a host and a game controller;
means for determining QOS of host data received by the game controller;
means for determining QOS of game controller data received by the host; and
means for changing communication power levels in a game controller, wherein transmission power is changed based on the QOS determination of the game controller and receiver sensitivity is changed based on the QOS determination of the host data.

34. The gaming system as recited in claim 33 wherein the means for exchanging data is performed through a wireless link.
